# EUROPÄISCHE PATENTSCHRIFT

(11) **EP 0 949 446 B1**
(45) Veröffentlichungstag und Bekanntmachung des Hinweises auf die Patenterteilung: **17.08.2005**
(21) Anmeldenummer: 99104705.1
(22) Anmeldetag: 10.03.1999
(51) Int. Cl.: F16T 1/38

(54) **Armaturengehäuse mit einem Anschlussteil und einer Haube**
Valve housing with a connector and a hood
Corps de soupape avec un raccord et un capot

(30) Priorität: 06.04.1998 DE 19815340
(43) Veröffentlichungstag der Anmeldung: 13.10.1999
(73) Patentinhaber: GESTRA AG, 28215 Bremen (DE)
(72) Erfinder: Borowski, Ralf, 28199 Bremen (DE)
(74) Vertreter: Eisenführ, Speiser & Partner

(56) Entgegenhaltungen:
- FR-A- 1 385 030
- GB-A- 575 490
- US-A- 3 433 412

## Beschreibung

Die Erfindung betrifft ein Armaturengehäuse der im Oberbegriff des Anspruchs 1 bzw. des Anspruchs 3 spezifizierten Art, das ein Anschlußteil und eine Haube aufweist.

Derartige Armaturengehäuse finden insbesondere für Ventile und Kondensatableiter Verwendung, die eine selbsttätige, kompakt gestaltete Steuereinheit aufweisen.

Bekannte Armaturengehäuse derartiger Ventile und Kondensatableiter weisen Hauben mit einem Vierkantflansch als Schraubenlager auf. Die Hauben werden mit vier Befestigungsschrauben mit dem Anschlußteil verbunden (DE GM 1 948 583, US PS 3 169 704, DE OS 2 059 798). Diese Verbindung hat sich in der Praxis bewährt. Bei einer Inspektion oder Reparatur können die Befestigungsschrauben ohne großen Kraftaufwand gelöst werden. Auf die Rohrleitung, in die das Armaturengehäuse eingebaut ist, wirken keine verformenden Belastungen ein.

Für die Verbindung mit der Rohrleitung werden die Armaturengehäuse, je nach Erfordernis, mit unterschiedlichen Anschlußenden ausgestattet, beispielsweise Schweißmuffen (DE GM 1 948 583), Gewindemuffen (US PS 3 169 704) oder Anschlußflansche (DE OS 2 059 798). Bekannte Armaturengehäuse weisen zwischen dem Vierkantflansch für die Haube und den Anschlußflanschen einen relativ geringen Abstand auf. Dies gilt insbesondere, wenn die Armaturengehäuse in den gebräuchlichen Standardbaulängen ausgeführt werden. Der geringe Abstand zwischen dem Anschlußflansch und dem Vierkantflansch ist zur Aufnahme der Schraubenmuttern ausreichend. Allerdings können die Flanschschrauben nicht von der Seite des Armaturengehäuses aus in die Schraubenlöcher der Anschlußflansche eingesteckt werden. Bedingt durch die jeweiligen örtlichen Gegebenheiten lassen sich aber die Flanschschrauben nicht in jedem Fall von der Seite der Rohrleitung aus in die Schraubenlöcher einstecken.

Alternativ zur Verbindung von Anschlußteil und Haube mittels Befestigungsschrauben wurde bei Armaturengehäusen selbsttätiger Ventile und Kondensatableitereine direkte Gewindeverbindung von Anschlußteil und Haube vorgeschlagen (DE AS 1 115 065, DE PS 27 33 610). Der das Einstecken der Flanschschrauben behindernde Vierkantflansch entfällt hier. Allerdings hat sich die Haube mit Gewinde nur bei thermodynamischen Kondensatableitern (DE PS 12 38 487) durchgesetzt. Diese weisen als Steuerorgan eine Scheibe sehr kleinen Durchmessers auf. Entsprechend gering ist auch die Abmessung der Haube. Demgegenüber sind beispielsweise temperatursensitive Steuereinheiten trotz kompakter Bauweise größer. Dies gilt dann auch für die Hauben. Das Gewinde einer solchen Haube erfordert ein entsprechend großes Drehmoment zum Festziehen oder Lösen. Damit verbunden ist die Gefahr eines Verbiegens der angeschlossenen Rohrleitung. Die Haube mit Gewinde hat sich deshalb bei Armaturengehäusen für Ventile und Kondensatableiter mit derartigen Steuereinheiten nicht durchgesetzt.

Ein weiteres Armaturengehäuse ist aus FR-A-1 385 030 bekannt. FR-A-1 385 030 wird als nächstliegender Stand der Technik betrachtet. FR-A-1 385 030 zeigt nämlich die Merkmale des Oberbegriffs von Anspruch 1 bzw. 3.

Der Erfindung liegt die Aufgabe zugrunde, ein Armaturengehäuse der eingangs genannten Art zu schaffen, das ein einfaches Befestigen und Lösen der Haube ermöglicht, ohne schädliche Einflüsse auf die Rohrleitung. Bei Ausführung des Armaturengehäuses mit Anschlußflanschen sollen die Flanschschrauben von der Seite des Armaturengehäuses aus in die Schraubenlöcher eingesteckt werden können.

Diese Aufgabe wird durch die im Anspruch 1 bzw. 3 angegebenen Merkmale gelöst.

Die Verbindung von Anschlußteil und Haube erfolgt mit zwei Befestigungsschrauben. Gegenüber der bekannten Ausführung mit vier Befestigungsschrauben reduziert sich der Montageaufwand entsprechend. Schädliche, zu einem Verbiegen der Rohrleitung führende Belastungen treten nicht auf. Da sich die zwei an der Haube vorhandenen Schraubenlager auf der Längsachse der Durchflußkanäle befinden, liegen sie zwischen den Schraubenlöchern der Anschlußflansche, sofern das Armaturengehäuse mit solchen versehen ist. Die Flanschschrauben können daher von der Seite des Armaturengehäuses aus in die Schraubenlöcher der Anschlußflansche eingesteckt werden.

Wenngleich das Anschlußteil im Bereich der Durchflußkanäle Mittel zur Aufnahme der Befestigungsschrauben aufweist, kann mit den Merkmalen des Anspruches 1 dennoch der Boden und damit die Steuereinheit in unmittelbarer Nähe der Durchflußkanäle vorgesehen werden. Die Bauhöhe des Armaturengehäuses kann daher gering gehalten werden. Durch den Abstand der Schraubenlager vom offenen Ende der Haube entsteht außerdem ein besonders formsteifer Abschnitt der Haube, der keiner Verformung durch die Einwirkung der Befestigungsschrauben auf die Schraubenlager unterworfen ist.

Die Vorsprünge sind als Befestigungspfosten gestaltet. Die Vorsprünge beschränken sich unmittelbar auf den Bereich der Befestigungsschrauben der Haube. Das notwendige Materialvolumen ist somit gering und der Boden des Anschlußteils ist besonders gut zugänglich. Wenn, wie es der Anspruch 2 vorsieht, die Höhe der Vorsprünge der Einschraublärige der Befestigungsschrauben entspricht, kann die Wandung der Durchflußkanäle gering gehalten werden. Dies trägt vorteilhaft zu geringer Materialmenge und damit geringem Gewicht bei.

Für Armaturengehäuse mit Anschlußflanschen sind die Merkmale des Anspruches 3 von besonderem Vorteil. Die Schraubenlager befinden sich radial außerhalb des Bereiches der Schraubenlöcher der Anschlußflansche. Dies ist vorteilhaft für das Einstecken der Flanschschrauben und außerdem auch für die Zugänglichkeit für Schraubwerkzeuge zum Festziehen/Lösen der Flanschschrauben.

Die Ausbildung des Bodens des Anschlußteils, der Haube und der Schraubenlager gemäß Anspruch 4 bietet hohe Formsteifigkeit. Bei vorhandenen Anschlußflanschen steht besonders viel Freiraum für das Einstecken der Flanschschrauben zur Verfügung. Überdies ist diese Lösung sehr fertigungsgünstig. Eine bevorzugte Ausgestaltung der Schraubenlager hat ergänzend der Anspruch 5 zum Gegenstand.

Die Merkmale des Anspruches 6 ermöglichen besonders kleine Außenmaßen der Haube bezogen auf deren Innenmaße. Die Abmessung der Haube in Längsrichtung der Durchflußkanäle wird besonders gering, was sich vorteilhaft auf die Baulänge des Armaturengehäuses auswirkt. Zugleich ist aber auch für das Festziehen und Lösen der Befestigungsschrauben, die die Haube mit dem Anschlußteil verbinden, großzügiger Freiraum für die Schraubwerkzeuge vorhanden. Bei alledem weist die Haube eine hohe Formsteifigkeit sowohl gegen Mediumdruckbelastung als auch gegen den Einfluß der Schraubenkräfte auf.

Bei bekannten Armaturengehäusen ist die Steuereinheit des Ventils oder Kondensatableiters zentral in der umgebenden Haube angeordnet. Abweichend davon sieht der Anspruch 7 eine außermittige Anordnung vor. Die sowohl für die Unterbringung der Steuereinheit als auch für die Einmündung der Verbindungskanäle in den Gehäuseinnenraum notwendige Innenabmessung der Haube läßt sich dadurch besonders gering halten. Der Anspruch 8 gibt dazu ergänzend einen besonders günstigen Achsversatz zwischen Haube und Steuereinheit an. Die notwendige Innenabmessung läßt sich durch die Merkmale der Ansprüche 9 und 10 noch weiter reduzieren. Wie zuvor bereits erwähnt, sind geringe Innenabmessungen und dementsprechend geringe Außenabmessungen einer geringen Baulänge des Armaturengehäuses und auch dem Einstecken der Flanschschrauben dienlich.

In der Zeichnung sind zwei Ausführungsbeispiele des erfindungsgemäßen Armaturengehäuses als Kondensatableiter dargestellt. Es zeigt
- Fig. 1: einen Kondensatableiter mit Anschlußflanschen im Längsschnitt,
- Fig. 2: den Kondensatableiter aus Fig. 1 in Draufsicht, Details im Schnitt,
- Fig. 3: den Kondensatableiter aus Fig. 1 in Vorderansicht, Details im Schnitt,
- Fig. 4: das Anschlußteil des Kondensatableiters aus Fig. 1 in Draufsicht,
- Fig. 5: das Anschlußteil des Kondensatableiters aus Fig. 1 im Schnitt 5 - 5,
- Fig. 6: einen Kondensatableiter mit Gewindemuffen im Längsschnitt und
- Fig. 7: das Anschlußteil des Kondensatableiters aus Fig. 6 im Schnitt 7 - 7.

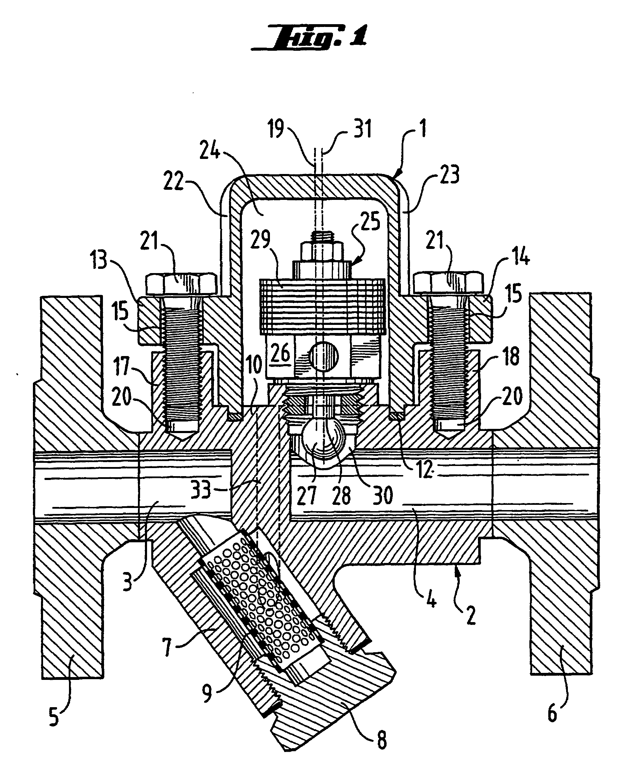

Das Armaturengehäuse des Kondensatableiters in Fig. 1 weist eine Haube 1 und ein Anschlußteil 2 auf. Letzteres ist mit Durchflußkanälen 3, 4 und an seinen beiden Anschlußenden mit Anschlußflanschen 5, 6 versehen, die alle miteinander fluchten. Der Durchflußkanal 3 erstreckt sich vom Anschlußflansch 5 aus in das Anschlußteil 2 hinein. Das Anschlußteil 2 weist einen schräg zu den Durchflußkanälen 3, 4 angeordneten Stutzen 7 auf, dessen freies Ende mit einem Stopfen 8 verschlossen ist. Innerhalb des Stutzens 7 befindet sich ein rohrförmiges Schmutzsieb 9, dessen Innenraum mit dem Durchflußkanal 3 in Verbindung steht. Der Durchflußkanal 4 erstreckt sich vom Anschlußflansch 6 aus in das Anschlußteil 2.

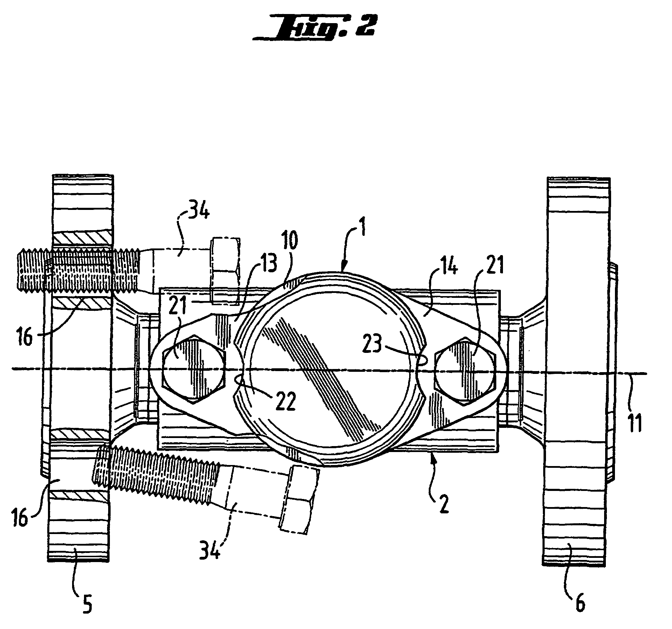

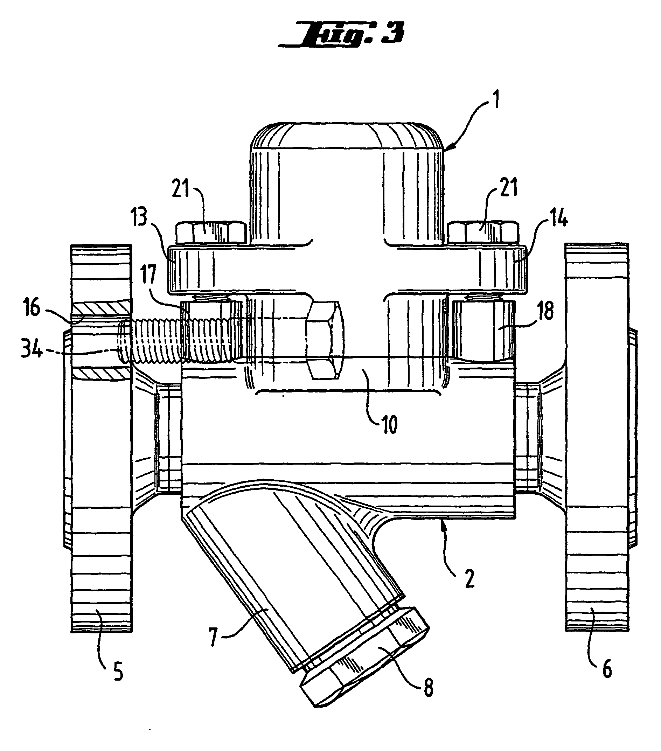

Das Anschlußteil 2 weist seitlich, parallel zu den Durchflußkanälen 3, 4 einen Boden 10 auf. Er befindet sich auf der dem Stutzen 7 abgewandten Seite des Anschlußteils 2 und ist als Kreisfläche ausgebildet, die quer zur Längsachse 11 der Durchflußkanäle 3, 4 über den übrigen Teil des Anschlußteils 2 hinausragt (Fig. 2). Die Haube 1 weist eine im wesentlichen runde Querschnittsform auf. Sie liegt mit ihrem offenen Ende 12 dichtend auf dem Boden 10 auf und ist mit zwei seitlich vorkragenden Schraubenlagern 13, 14 versehen. Diese sind diametral gegenüberliegend auf der Durchflußkanal-Längsachse 11 angeordnet (Fig. 2) und weisen dort Schraubenlöcher 15 auf. Zudem sind die Schraubenlager 13, 14 in einem solchen Abstand zum Anschlußteil 2 und zum offenen Ende 12 der Haube 1 angeordnet, daß sie sich in Längsrichtung der Haube 1 radial außerhalb der Schraubenlöcher 16 der Anschlußflansche 5, 6 befinden (Fig. 3). Die Form der Schraubenlager 13, 14 ist im wesentlichen dreieckig. Sie geht tangential in den Außendurchmesser der Haube 1 über, während sie an ihrem anderen Ende abgerundet ist (Fig. 2).

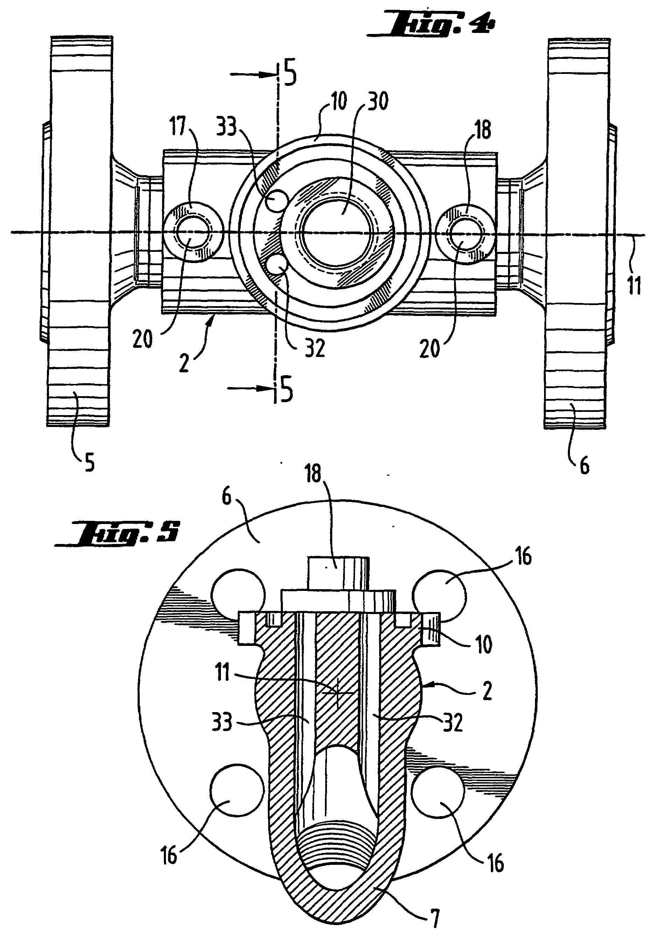

Beiderseits neben dem Boden 10 weist das Anschlußteil 2 auf der Durchflußkanal-Längsachse 11 in nächster Nähe zur Haube 1 zwei pfostenartig ausgebildete Vorsprünge 17, 18 auf (Fig. 4). Sie erstrecken sich quer zu den Durchflußkanälen 3, 4 und zugleich parallel zur Längsachse 19 der Haube 1 (Fig. 1). Die Schraubenlager 13, 14 der Haube 1 befinden sich mit Abstand vor den Enden der Vorsprünge 17, 18. Die Vorsprünge 17, 18 weisen gleichachsig mit den Schraubenlöchern 15 der Schraubenlager 13, 14 Befestigungsbohrungen 20 mit Gewinde auf. Zwei Befestigungsschrauben 21 ragen durch die Schraubenlöcher 15 der Schraubenlager 13, 14 hindurch und sind in die Befestigungsbohrungen 20 eingeschraubt. Die Länge der Vorsprünge 17, 18 entspricht im wesentlichen der Einschraublänge der Befestigungsschrauben 21, die die Haube 1 fest mit dem Anschlußteil 2 verbinden.

Auf der dem Anschlußteil 2 abgewandten Seite, jenseits der Schraubenlager 13, 14 ist die Haube 1 im Bereich der Befestigungsschrauben 21 mit radialen Einbuchtungen 22, 23 versehen. Sie erstrecken sich von den Schraubenlagern 13, 14 zum geschlossenen, freien Ende der Haube 1 und bieten so hinreichend Freiraum für Schraubwerkzeuge - beispielsweise Steckschlüssel - zum Festziehen/Lösen der Befestigungsschrauben 21. Da nur zwei Befestigungsschrauben 21 vorhanden sind, erfordert das Anbringen oder Entfernen der Haube 1 nur geringen Aufwand. Durch die Einbuchtungen 22, 23 läßt sich außerdem das Baumaß der Haube in Richtung der Durchflußkanal-Längsachse 11 gering halten, was sich günstig auf die Baulänge des Anschlußteils 2 und mithin des Armaturengehäuses auswirkt. Von ihrem offenen Ende 12 bis zu den Schraubenlagern 13, 14 weist die Haube 1 einen durchgängig kreisringförmigen Querschnitt und damit eine hohe Formstabilität auf. Die von den beiden Befestigungsschrauben 21 über die Schraubenlager 13, 14 auf die Haube 1 ausgeübten Haltekräfte bewirken daher eine zuverlässige Abdichtung zwischen Haube 1 und Boden 10.

Die Haube 1 und der Boden 10 des Anschlußteils 2 bilden einen Gehäuseinnenraum 24, in dem sich eine selbsttätige Steuereinheit 25 zur Steuerung des Mediumdurchflusses befindet. Da sich der Boden 10, im Gegensatz zu den Schraubenlagern 13, 14, in nächster Nähe zu den Durchflußkanälen 3, 4 befindet, kann auch die Steuereinheit 25 nahe zu ihnen angeordnet werden. Die Gesamtbauhöhe von Haube 1 und Anschlußteil 2 wird dadurch minimiert.

Die Steuereinheit 25 weist eine Ventilsitzbuchse 26, ein damit zusammenwirkendes Verschlußteil 27 mit einem Verschlußteilschaft 28 und ein Bimetall-Steuerorgan 29 auf. Das Bimetall-Steuerorgan 29 besteht aus aufeinandergeschichteten Bimetallscheiben, die sich bei Erwärmung durchwölben. Es stützt sich mit seinem einen Ende auf der Ventilsitzbuchse 26 ab, während sein anderes Ende in Hubrichtung auf den Verschlußteilschaft 28 einwirkt. Die Ventilsitzbuchse 26 ist in einen Verbindungskanal 30 eingeschraubt, der sich zwischen dem Gehäuseinnenraum 24 und dem für den Mediumabfluß vorgesehenen Durchflußkanal 4 erstreckt. Die gemeinsame Längsachse 31 von Verbindungskanal 30 und Steuereinheit 25 ist gegen die Hauben-Längsachse 19 in Richtung zum Anschlußflansch 6 hin versetzt.

Mit anderen Worten: Die Steuereinheit-Längsachse 31 ist in Richtung zum Anschlußende des mit dem Verbindungskanal 30 verbundenen Durchflußkanals 4 versetzt. Der Achsversatz ist so groß, daß sich die Steuereinheit 25 mit ihrem in Richtung der Durchflußkanal-Längsachse 11 ausladensten Teil - dies ist das Bimetall-Steuerorgan 29 - in unmittelbarer Nähe der Haube 1 befindet. Zwischen Haube 1 und Steuereinheit 25 ist dort nur ein minimaler seitlicher Freiraum vorhanden. Auf der diametral gegenüberliegenden Seite ist der seitliche Freiraum deutlich größer. In den Gehäuseinnenraum 24 gelangendes Medium kann so das Bimetall-Steuerorgan 29 intensiv umströmen und beaufschlagen. Durch den Achsversatz weist auf besagter Seite der Boden 10 seine größte radiale Breite zwischen dem Verbindungskanal 30 und der Haube 1 auf. In diesem Bereich ist beiderseits der Durchflußkanal-Längsachse 11 im Anschlußteil 2 je ein Verbindungskanal 32, 33 vorgesehen (Fig. 4, 5). Beide Verbindungskanäle 32, 33 führen in den Stutzen 7. Der Durchflußkanal 3 steht folglich via Stutzen 7 und Verbindungskanäle 32, 33 mit dem Gehäuseinnenraum 24 in Verbindung. Der Achsversatz und die beiden parallelgeschalteten Verbindungskanäle 32, 33 ermöglichen bei gutem Mediumzufluß eine Haube 1 mit kleinem Durchmesser.

Beim Einbau des Kondensatableiters in eine Rohrleitung, aus der Kondensat abzuleiten ist, (nicht dargestellt) werden die Anschlußflansche 5, 6 des Anschlußteils 2 mit Anschlußflanschen der Kondensatleitung (nicht dargestellt) mittels Flanschschrauben 34 verbunden. Wie die Fig. 2 und 3 am Beispiel einzelner Flanschschrauben 34 zeigen (strichpunktiert dargestellt), lassen sich diese von der dem Anschlußteil 2 zugewandten Seite aus problemlos in die Schraubenlöcher 16 des Anschlußflansches 5 einstecken. Weder die Haube 1 noch ihre Schraubenlager 13, 14 noch die Vorsprünge 17, 18 des Anschlußteil 2 behindern das Einstecken der Flanschschrauben 34. Ein kleiner Durchmesser der Haube 1 erweist sich herbei als vorteilhaft. Auch ist für Schraubwerkzeuge zum Festziehen bzw. Lösen der Flanschschrauben 34 hinreichend Freiraum vorhanden. Dies gilt für beide Anschlußflansch 5, 6.

Medium strömt durch den Flansch 5 in den Durchflußkanal 3 des Kondensatableiters und von dort in das Schmutzsieb 9 (Fig. 1). Aus diesem tritt es radial nach außen in den umgebenden Stutzen 7, wobei eventuell im Kondensat enthaltene Schmutzpartikel durch das Schmutzsieb 9 zurückgehalten werden. - Der Stopfen 8 ermöglicht bei Bedarf ein Reinigen des Schmutzsiebes 9. - Aus dem Stutzen 7 strömt das Medium parallel durch die beiden Verbindungskanäle 32, 33 (Fig. 5) in den Gehäuseinnenraum 24 und beaufschlagt dort das Bimetall-Steuerorgan 29.

Handelt es sich um abzuleitendes Kondensat, dann liegt die Temperatur unterhalb einer vorbestimmten Schließtemperatur und das Verschlußteil 27 befindet sich in Offenstellung (Fig. 1). Das Kondensat kann aus dem Gehäuseinnenraum 24 durch die Ventilsitzbuchse 26 hindurch in den Verbindungskanal 30 und von dort in den Durchflußkanal 4 weiterfließen und durch den Anschlußflansch 6 aus dem Kondensatableiter austreten. Strömt nach Ableiten des Kondensates Dampf in den Gehäuseinnenraum 24, übersteigt dort die Temperatur die Schließtemperatur der Steuereinheit. Die Bimetallscheiben des Bimetall-Steuerorgans 29 wölben sich entsprechend durch und bewegen das Verschlußteil 27 in Schließrichtung, bis es dichtend auf der Ventilsitzbuchse 26 zur Auflage kommt. Dampf kann nicht aus dem Gehäuseinnenraum 24 abströmen.

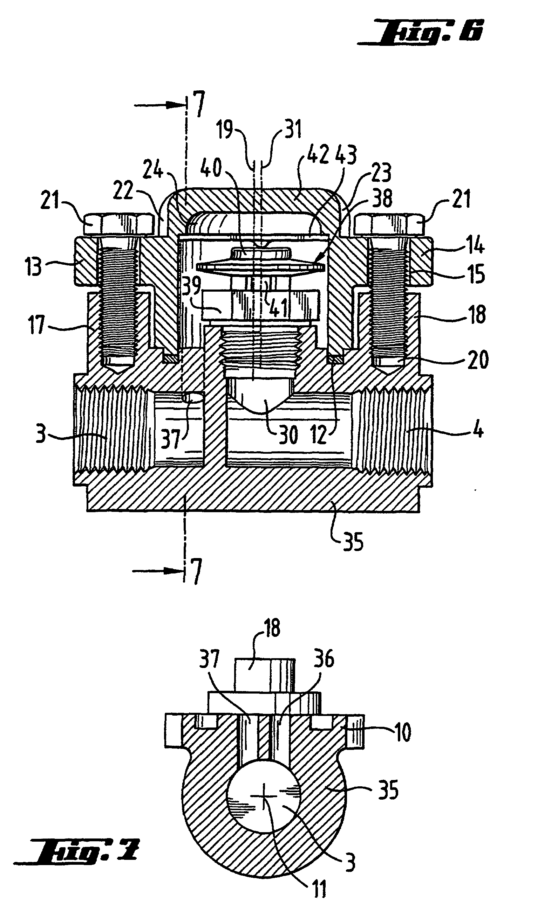

Das Anschlußteil 35 des Kondensatableiters nach Fig. 6 weist an den Anschlußenden seiner Durchflußkanäle 3, 4 Gewindemuffen für den Anschluß an eine Rohrleitung auf. Beiderseits der Durchflußkanal-Längsachse 11 ist im Anschlußteil 35 je ein Verbindungskanal 36, 37 vorgesehen (Fig. 7). Die zwei Verbindungskanäle 36, 37 stellen eine direkte Verbindung zwischen dem Durchflußkanal 3 und dem Gehäuseinnenraum 24 her. Die im Gehäuseinnenraum 24 vorgesehene Steuereinheit 38 weist eine Ventilsitzbuchse 39 auf, an der eine Membrankapsel 40 mit einem Verschlußteil 41 angeordnet ist. Die Bauhöhe der Membrankapsel 40 ist gering und die Haube 42 dementsprechend niedrig. Eine sich an der Haube 42 abstützende Haltefeder 43 fixiert die Membrankapsel 40 in ihrer Einbauposition.

Derartige Membrankapseln 40 sind hinlänglich bekannt. Sie weisen eine mit einem Ausdehnungsmedium oder einem Verdampfungsmedium gefüllte Kammer mit einer auf das Verschlußteil 41 hubbewegend einwirkenden Membran auf (nicht dargestellt). Ist die vorgesehene Schließtemperatur erreicht, wird die Membran durch den dann in der Kammer herrschenden Überdruck des Ausdehnungs-/Verdampfungsmediums durchgewölbt und das Verschlußteil 41 auf der Ventilsitzbuchse dichtend zur Auflage gebracht. Wird die Schließtemperatur unterschritten, überwiegt der die Membrankapsel 40 umgebende Druck und das Verschlußteil 41 nimmt seine Offenstellung ein.

Im übrigen gleicht der Kondensatableiter nach den Fig. 6 und 7 in Gestaltung und Funktion jenem nach den Fig. 1 - 5.

In Fig. 1 sind die Anschlußflanschen 5, 6 als Teile dargestellt, die mit dem Anschlußteil 2 durch Schweißen verbunden sind. Diese dreiteilige Ausführung bietet den Vorteil, das gleiche Anschlußrohteil für Armaturengehäuse mit Flanschanschluß und solche mit Muffenanschluß (Gewindemuffen, Schweißmuffen) verwenden zu können. Selbstverständlich besteht die Möglichkeit, ein einteiliges Anschlußteil mit integrierten Anschlußflanschen vorzusehen. Sowohl die Ausführung mit Schmutzsieb als auch die ohne kann gleichermaßen für alle Anschlußausführungen (Anschlußflanschen, Muffen) realisiert werden. Wenngleich in den Zeichnungen Kondensatableiter mit temperatursensitiver Steuereinheit dargestellt sind, ist das Armaturengehäuse gleichermaßen für Kondensatableiter mit anderer kompakt gestalteter Steuereinheit verwendbar, beispielsweise solche mit thermodynamischer Steuereinheit. Im übrigen ist das Armaturengehäuse auch für Ventile mit kompakt gestalteter, selbsttätiger Steuereinheit geeignet, z. B. für thermisch gesteuerte oder für druckgesteuerte Ventile. Der Durchfluß durch das Armaturengehäuse kann im Bedarfsfall so gewählt werden, daß sich die Steuereinheit abströmseitig hinter der von Ventilsitzbuchse und Verschlußteil gebildeten Absperrstelle befindet. Die Befestigungsschrauben für die Haube können alternativ zu den gezeigten Schrauben mit Kopf beispielsweise als Stiftschrauben mit Mutter ausgeführt werden.

### Bezugszeichenliste

- 1: Haube
- 2: Anschlußteil
- 3, 4: Durchflußkanal
- 5, 6: Anschlußflansch
- 7: Stutzen
- 8: Stopfen
- 9: Schmutzsieb
- 10: Boden
- 11: Durchflußkanal-Längsachse
- 12: offenes Ende
- 13, 14: Schraubenlager
- 15, 16: Schraubenloch
- 17, 18: Vorsprünge
- 19: Hauben-Längsachse
- 20: Befestigungsbohrung
- 21: Befestigungsschraube
- 22, 23: Einbuchtung
- 24: Gehäuseinnenraum
- 25: Steuereinheit
- 26: Ventilsitzbuchse
- 27: Verschlußteil
- 28: Verschlußteilschaft
- 29: Bimetall-Steuerorgan
- 30: Verbindungskanal
- 31: Steuerorgan-Längsachse
- 32, 33: Verbindungskanal
- 34: Flanschschraube
- 35: Anschlußteil
- 36, 37: Verbindungskanal
- 38: Steuereinheit
- 39: Ventilsitzbuchse
- 40: Membrankapsel
- 41: Verschlußteil
- 42: Haube
- 43: Haltefeder

## Patentansprüche

1. Armaturengehäuse mit einem Anschlussteil (2; 35) und einer Haube (1; 42), wobei
das Anschlussteil (2; 35) zwei Anschlussenden und zwei miteinander fluchtende Durchflusskanäle (3, 4) aufweist, die sich jeder von einem anderen der beiden Anschlussenden in das Gehäuse erstrecken und von denen jeweils einer dem Mediumzufluss und der andere dem Mediumabfluss dient,
das Anschlussteil (2; 35) einen seitlich der Durchflusskanäle (3, 4) angeordneten Boden (10) aufweist,
die Haube (1; 42) mit ihrem offenen Ende (12) auf dem Boden (10) des Anschlussteils (2; 35) aufliegt und gemeinsam mit dem Boden (10) einen Gehäuseinnenraum (24) bildet, der mit den Durchflusskanälen (3, 4) in Verbindung steht und der Aufnahme einer Steuereinheit (25) zur Steuerung des Mediumflusses durch das Armaturengehäuse dient,
die Haube (1; 42) seitlich vorkragende Schraubenlager (13, 14) aufweist und Befestigungsschrauben (21) vorgesehen sind, die an den Schraubenlagern (13, 14) angreifen und die Haube (1; 42) mit dem Anschlussteil (2; 35) verbinden,
das Anschlussteil (2; 35) beiderseits neben dem Boden (10), auf der Längsachse (11) der Durchflusskanäle (3, 4) Mittel (17, 18, 20) zur Schraubenbefestigung aufweist,
die Haube (1; 42) diametral entgegengesetzt zwei Schraubenlager (13, 14) aufweist, die auf der Längsachse (11) der Durchflusskanäle (3, 4) angeordnet sind, und
die Haube (1; 42) mit zwei Befestigungsschrauben (21) mit dem Anschlussteil (2; 35) verbunden ist,
**dadurch gekennzeichnet, dass** die Schraubenlager (13, 14) mit Abstand zum offenen Ende (12) der Haube (1; 42) angeordnet sind und
das Anschlussteil (2; 35) auf der Längsachse (11) der Durchflusskanäle (3, 4) zwei sich in Längsrichtung der Haube (1; 42) erstreckende pfostenartig ausgebildete Vorsprünge (17, 18) mit Befestigungsbohrungen (20) für die Befestigungsschrauben (21) aufweist.

2. Armaturengehäuse nach Anspruch 1,
**dadurch gekennzeichnet, dass** die Höhe der Vorsprünge (17; 18) im Wesentlichen der Einschraublänge der Befestigungsschrauben (21) entspricht.

3. Armaturengehäuse mit einem Anschlussteil (2; 35) und einer Haube (1; 42), wobei
das Anschlussteil (2; 35) zwei Anschlussenden und zwei miteinander fluchtende Durchflusskanäle (3, 4) aufweist, die sich jeder von einem anderen der beiden Anschlussenden in das Gehäuse erstrecken und von denen jeweils einer dem Mediumzufluss und der andere dem Mediumabfluss dient,
das Anschlussteil (2; 35) einen seitlich der Durchflusskanäle (3, 4) angeordneten Boden (10) aufweist,
die Haube (1; 42) mit ihrem offenen Ende (12) auf dem Boden (10) des Anschlussteils (2; 35) aufliegt und gemeinsam mit dem Boden (10) einen Gehäuseinnenraum (24) bildet, der mit den Durchflusskanälen (3, 4) in Verbindung steht und der Aufnahme einer Steuereinheit (25) zur Steuerung des Mediumflusses durch das Armaturengehäuse dient,
die Haube (1; 42) seitlich vorkragende Schraubenlager (13, 14) aufweist und
Befestigungsschrauben (21) vorgesehen sind, die an den Schraubenlagern (13, 14) angreifen und die Haube (1; 42) mit dem Anschlussteil (2; 35) verbinden,
das Anschlussteil (2; 35) beiderseits neben dem Boden (10), auf der Längsachse (11) der Durchflusskanäle (3, 4) Mittel (17, 18, 20) zur Schraubenbefestigung aufweist,
die Haube (1; 42) diametral entgegengesetzt zwei Schraubenlager (13, 14) aufweist, die auf der Längsachse (11) der Durchflusskanäle (3, 4) angeordnet sind, und
die Haube (1; 42) mit zwei Befestigungsschrauben (21) mit dem Anschlussteil (2; 35) verbunden ist,
**dadurch gekennzeichnet, dass** die Schraubenlager (13, 14) in einem solchen Abstand zum offenen Ende (12) der Haube (1; 42) angeordnet sind, dass sie sich radial außerhalb der Schraubenlöcher (16) von an beiden Anschlussenden des Armaturengehäuses vorgesehenen Anschlussflanschen (5, 6) befinden.

4. Armaturengehäuse nach einem der vorhergehenden Ansprüche,
**dadurch gekennzeichnet, dass**
der Boden (10) als Kreisfläche ausgebildet ist,
die Haube (1; 42) eine im Wesentlichen runde Querschnittsform aufweist, an der diametral gegenüberliegend die Schraubenlager (13, 14) angeordnet sind, und
die Breite der Schraubenlager (13, 14) sich von der Haube (1; 42) zum freien Ende der Schraubenlager (13, 14) hin verringert.

5. Armaturengehäuse nach Anspruch 4,
**dadurch gekennzeichnet, dass** die Schraubenlager (13, 14) eine im Wesentlichen dreieckige Form aufweisen, die tangential in den Außendurchmesser der Haube (1; 42) übergeht und an ihrem anderen Ende abgerundet ist.

6. Armaturengehäuse nach einem der vorhergehenden Ansprüche,
**dadurch gekennzeichnet, dass** die Haube (1; 42) im Bereich zwischen ihrem
fenen Ende (12) und den Schraubenlagern (13, 14) einen kreisförmigen Querschnitt aufweist, während sie jenseits der Schraubenlager (13, 14) im Bereich der beiden Befestigungsschrauben (21) außen mit radialen Einbuchtungen (22, 23) versehen ist.

7. Armaturengehäuse nach einem der vorhergehenden Ansprüche,
**dadurch gekennzeichnet, dass**
der Boden (10) des Anschlussteils (2; 35) achsversetzt zur Längsachse (19) der Haube (1; 42) Verbindungskanäle (30; 32, 33; 36, 37) aufweist, die den Gehäuseinnenraum (24) mit den Durchflusskanälen (3; 4) verbinden, an dem einen Verbindungskanal (30) die Steuereinheit (25; 38) angeordnet ist und sein Achsversatz in Richtung zum Anschfussende des mit diesem Verbindungskanal (30) verbundenen Durchflusskanals (4) gelegen ist und
der andere Verbindungskanal (32; 36) im Bereich des größten zwischen dem einen Verbindungskanal (30) und der Haube (1; 42) existierenden Abstandes angeordnet ist.

8. Armaturengehäuse nach Anspruch 7,
**dadurch gekennzeichnet, dass** der eine Verbindungskanal (30) soweit achsversetzt ist, dass sich die dem nähergelegenen Anschlussende zugewandte Seite einer an diesem Verbindungskanal (30) angebrachten Steuereinheit (25; 38) in unmittelbarer Nähe der Haube (1; 42) befindet.

9. Armaturengehäuse nach Anspruch 7 oder 8, **dadurch gekennzeichnet, dass** im Bereich des größten Abstandes zwischen dem einen Verbindungskanal (30) und der Haube (1; 42) im Boden (10) des Anschlussteils (2; 35) mindestens ein weiterer den anderen Durchflusskanal (3) mit dem Gehäuseinnenraum (24) verbindender Verbindungskanal (33; 37) angeordnet ist.

10. Armaturengehäuse nach Anspruch 9,
**dadurch gekennzeichnet, dass** die Verbindungskanäle (32, 33; 36, 37) im Bereich des größten Abstandes zwischen dem einen Verbindungskanal (30) und der Haube (1; 42) beiderseits der Längsachse (11) der Durchflusskanäle (3; 4) angeordnet sind.

## Claims

1. Valve housing with a connecting part (2;35)and a cap (1 ;42), wherein the connecting part (2;35) comprises two connecting ends and two mutually aligned flow ducts (3;4) which each extend from another of the two connecting ends into the housing, of which one serves for the supply of medium and the other for the discharge of medium respectively,
the connecting part (2;35) has a base (10) arranged to the side of the flow ducts (3;4),
the cap (1;42) rests with its open end (12) on the base (10) of the connecting part (2;35) and, together with the base (10), forms a housing interior (24) which communicates with the flow ducts (3;4) and accommodates a control unit (25) for controlling the flow of medium through the valve housing,
the cap (1;42) comprises laterally projecting screw bearings (13;14) and fastening screws (21) are provided which act on the screw bearings (13;14) and connect the cap (1;42) to the connecting part (2;35),
the connecting part (2;35) has, on either side next to the base (10) on the longitudinal axis (11) of the flow ducts (3,4), screw fastening means (17,18,20),
the cap (1;42) has two diametrically opposed screw bearings (13,14) which are arranged on the longitudinal axis (11) of the flow ducts (3,4)
and
the cap (1;42) is connected to the connecting part (2;35) by two fastening screws (21),
**characterised in that** the screw bearings (13,14) are arranged at a distance from the open end (12) of the cap (1;42) and
that the connecting part (2;35) has, on the longitudinal axis (11) of the flow ducts (3,4), two projections (17,18), designed in the manner of posts, extending in the longitudinal direction of the cap (1;42), with fastening orifices (20) for the fastening screws (21).

2. Valve housing according to claim 1,
**characterised in that** the height of the projections (17,18) substantially corresponds to the screw-in length of the fastening screws (21).

3. Valve housing with a connecting part (2;35) and a cap(1;42), wherein the connecting part (2;35) comprises two connecting ends and two mutually aligned flow ducts (3;4) which each extend from another of the two connecting ends into the housing, of which one serves for the supply of medium and the other for the discharge of medium respectively,
the connecting part (2;35) has a base (10) arranged to the side of the flow ducts (3;4),
the cap (1;42) rests with its open end (12) on the base (10) of the connecting part (2;35) and, together with the base (10), forms a housing interior (24) which communicates with the flow ducts (3;4) and accommodates a control unit (25) for controlling the flow of medium through the valve housing,
the cap (1;42) comprises laterally projecting screw bearings (13;14) and fastening screws (21) are provided which act on the screw bearings (13;14) and connect the cap (1;42) to the connecting part (2;35),
the connecting part (2;35) has, on either side next to the base (10) on the longitudinal axis (11) of the flow ducts (3,4), screw fastening means (17,18,20),
the cap (1;42) has two diametrically opposed screw bearings (13,14) which are arranged on the longitudinal axis (11) of the flow ducts (3,4),
and
the cap (1;42) is connected to the connecting part (2;35) by two fastening screws (21),
**characterised in that** the screw bearings (13,14) are arranged at such a distance from the open end (12) of the cap (1;42) that they are located radially outside the screw holes (16) on both connecting ends of the connecting part provided with connecting flanges (5,6).

4. Valve housing according to one of the preceding claims, **characterised in that**
the base (10) is designed as a circular face,
the cap (1;42) has a substantially circular cross-sectional shape on which the screw bearings (13,14) are arranged in a diametrically opposed manner, and
the width of the screw bearings (13,14) diminishes from the cap (1;42) to the free end of the screw bearings (13,14).

5. Valve housing according to claim 4, **characterised in that** the screw bearings (13,14) have a substantially triangular shape which passes tangentially into the external diameter of the cap (1; 42) and is rounded at its other end.

6. Valve housing according to one of the preceding claims, **characterised in that** the cap (1 ;42) has an annular cross section between its open end (12) and the screw bearings (13, 14) whereas it is provided externally with radial indentations (22,23) in the region of the two fastening screws (21) on the far side of the screw bearings (13,14).

7. Valve housing according to one of the preceding claims, **characterised in that**
the base (10) of the connecting part (2;35) has connecting ducts (30;32,33;36,37) which are axially offset from the longitudinal axis (19) of the cap (1;42) and connect the interior (24) of the housing to the flow ducts (3,4),
the control unit (25;38) is arranged on one connecting duct (30) and its axial offset is located toward the connecting end of the flow duct (4) connected to this connecting duct (30), and
the other connecting duct (32;36) is arranged in the region of the maximum distance existing between one connecting duct (30) and the cap (1;42).

8. Valve housing according to claim 7, **characterised in that** one connecting duct (30) is axially offset so far a control unit (25;38) arranged on this connecting duct (30) is located with its side facing the closer connecting end in the immediate vicinity of the cap (1;42).

9. Valve housing according to claim 7 or 8, **characterised in that** at least one further connecting duct (33,37) connecting the other flow duct (3) to the interior (24) of the housing is arranged in the region of the greatest distance between one connecting duct (30) and the cap (1;42) in the base of the connecting part (2;35).

10. Valve housing according to claim 9, **characterised in that** the connecting ducts (32,33;36,37) are arranged in the region of the greatest distance between one connecting duct (30) and the cap (1;42) on either side of the longitudinal axis (11) of the flow ducts (3,4).

## Revendications

1. Corps de robinetterie, comportant une partie de raccordement (2 ; 35) et un capuchon (1 ; 42), dans lequel
la partie de raccordement (2 ; 35) présente deux extrémités de raccordement et deux canaux d'écoulement (3, 4) en alignement l'un sur l'autre, qui s'étendent chacun depuis une autre des deux extrémités de raccordement jusque dans le corps et dont l'un sert à l'amenée de fluide et l'autre sert à l'évacuation de fluide,
la partie de raccordement (2 ; 35) présente un fond (10) agencé latéralement aux canaux d'écoulement (3, 4),
le capuchon (1 ; 42) repose avec son extrémité (12) ouverte sur le fond (10) de la partie de raccordement (2 ; 35) et forme conjointement avec le fond (10) un espace intérieur de corps (24) qui est en communication avec les canaux d'écoulement (3, 4) et qui sert à recevoir une unité de commande (25) pour commander le débit de fluide à travers le corps de robinetterie,
le capuchon (1 ; 42) présente des montures à vis (13, 14) en porte-à-faux latéralement, et il est prévu des vis de fixation (21) qui s'engagent dans les montures à vis (13, 14) et qui relient le capuchon (1 ; 42) avec la partie de raccordement (2 ; 35),
la partie de raccordement (2 ; 35) présente de part et d'autre à côté du fond (10), sur l'axe longitudinal (11) des canaux d'écoulement (3, 4), des moyens (17, 18, 20) de fixation à vis,
le capuchon (1 ; 42) présente deux montures à vis (13, 14) diamétralement opposées qui sont agencées sur l'axe longitudinal. (11) des canaux d'écoulement (3, 4), et
le capuchon (1 ; 42) est relié par deux vis de fixation (21) à la partie de raccordement (2 ; 35) ;
**caractérisé en ce que** les montures à vis (13, 14) sont agencées à distance de l'extrémité (12) ouverte du capuchon (1 ; 42) et
la partie de raccordement (2 ; 35) présente sur l'axe longitudinal (11) des canaux d'écoulement (3, 4) deux saillies (17, 18) réalisées en forme de colonnette s'étendant en direction longitudinale du capuchon (1 ; 42) avec des alésages de fixation (20) pour les vis de fixation (21).

2. Corps de robinetterie selon la revendication 1, **caractérisé en ce que** la hauteur des saillies (17 ; 18) correspond sensiblement à la longueur de vissage des vis de fixation (21).

3. Corps de robinetterie comportant une partie de raccordement (2 ; 35) et un capuchon (1 ; 42), dans lequel
la partie de raccordement (2 ; 35) présente deux extrémités de raccordement et deux canaux d'écoulement (3, 4) en alignement l'un sur l'autre, qui s'étendent chacun depuis une autre des deux extrémités de raccordement jusque dans le corps et dont l'un sert à l'amenée de fluide et l'autre sert à l'évacuation de fluide,
la partie de raccordement (2 ; 35) présente un fond (10) agencé latéralement aux canaux d'écoulement (3, 4),
le capuchon (1 ; 42) repose avec son extrémité (12) ouverte sur le fond (10) de la partie de raccordement (2 ; 35) et forme conjointement avec le fond (10) un espace intérieur de corps (24) qui est en communication avec les canaux d'écoulement (3, 4) et qui sert à recevoir une unité de commande (25) pour commander le débit de fluide à travers le corps de robinetterie,
le capuchon (1 ; 42) présente des montures à vis (13, 14) en porte-à-faux latéralement, et il est prévu des vis de fixation (21) qui s'engagent dans les montures à vis (13, 14) et qui relient le capuchon (1 ; 42) avec la partie de raccordement (2 ; 35),
la partie de raccordement (2 ; 35) présente de part et d'autre à côté du fond (10), sur l'axe longitudinal (11) des canaux d'écoulement (3, 4), des moyens (17, 18, 20) de fixation à vis,
le capuchon (1 ; 42) présente deux montures à vis (13, 14) diamétralement opposées qui sont agencées sur l'axe longitudinal (11) des canaux d'écoulement (3, 4), et
le capuchon (1 ; 42) est relié par deux vis de fixation (21) à la partie de raccordement (2 ; 35) ;
**caractérisé en ce que** les montures à vis (13, 14) sont agencées à une distance telle de l'extrémité (12) ouverte du capuchon (1 ; 42) qu'elles se trouvent radialement à l'extérieur des trous de vis (16) de brides de raccordement (5, 6) prévues aux deux extrémités de raccordement du corps de robinetterie.

4. Corps de robinetterie selon l'une des revendications précédentes,
**caractérisé en ce que**
le fond (10) est réalisé sous forme de surface circulaire,
le capuchon (1 ; 42) présente une forme de section transversale sensiblement ronde, sur laquelle les paliers de vis (13, 14) sont agencés de manière diamétralement opposée, et la largeur des montures à vis (13, 14) se réduit depuis le capuchon (1 ; 42) vers l'extrémité libre des montures à vis (13, 14).

5. Corps de robinetterie selon la revendication 4,
**caractérisé en ce que** les montures à vis (13, 14) présentent une forme sensiblement triangulaire qui se transforme tangentiellement dans le diamètre extérieur du capuchon (1 ; 42) et qui est arrondie à son autre extrémité.

6. Corps de robinetterie selon l'une des revendications précédentes,
**caractérisé en ce que**
le capuchon (1 ; 42) présente une section transversale circulaire dans la région entre son extrémité (12) ouverte et les montures à vis (13, 14) tandis qu'au-delà des montures à vis (13, 14), il est pourvu, sur l'extérieur, de creux (22, 23) radiaux dans la région des deux vis de fixation (21).

7. Corps de robinetterie selon l'une des revendications précédentes,
**caractérisé en ce que**
le fond (10) de la partie de raccordement (2 ; 35) présente avec décalage axial par rapport à l'axe longitudinal (19) du capuchon (1 ; 42) des canaux de liaison (30 ; 32, 33 ; 36, 37) qui relient l'espace intérieur de corps (24) aux canaux d'écoulement (3 ; 4),
l'unité de commande (25 ; 38) est agencée sur ledit un canal de liaison (30), et son décalage axial est situé en direction de l'extrémité de raccordement du canal d'écoulement (4) relié à ce canal de liaison (30), et
l'autre canal de liaison (32 ; 36) est agencé dans la région de la plus grande distance existant entre ledit un canal de liaison (30) et le capuchon (1 ; 42).

8. Corps de robinetterie selon la revendication 7,
**caractérisé en ce que** ledit un canal de liaison (30) est décalé axialement dans une mesure telle que le côté tourné vers l'extrémité de raccordement la plus proche, d'une unité de commande (25 ; 38) montée sur ce canal de liaison (30), se trouve à proximité directe du capuchon (1 ; 42).

9. Corps de robinetterie selon l'une ou l'autre des revendications 7 et 8,
**caractérisé en ce que** dans la région de la plus grande distance entre ledit un canal de liaison (30) et le capuchon (1 ; 42), au moins un autre canal de liaison (33 ; 37) reliant l'autre canal d'écoulement (3) à l'espace intérieur de corps (24) est agencé dans le fond (10) de la partie de raccordement (2 ; 35).

10. Corps de robinetterie selon la revendication 9,
**caractérisé en ce que** les canaux de liaison (32, 33 ; 36, 37) sont agencés dans la région de la plus grande distance entre ledit un canal de liaison (30) et le capuchon (1 ; 42), de part et d'autre de l'axe longitudinal (11) des canaux d'écoulement (3 ; 4).
